# EUROPÄISCHE PATENTSCHRIFT

(11) **EP 2 028 397 B1**
(45) Veröffentlichungstag und Bekanntmachung des Hinweises auf die Patenterteilung: **28.09.2016**
(21) Anmeldenummer: 08012738.4
(22) Anmeldetag: 15.07.2008
(51) Int. Cl.: F16H 63/42

(54) **Kraftfahrzeug mit einer Displayanzeige des Schaltzeitpunkts in Verbindung mit einer Information über das gelieferte Motordrehmoment**
Motor vehicle with a display of the switching time in connection with information about the engine torque delivered
Véhicule automobile doté d'un écran d'affichage du point de changement de vitesse en rapport à une information sur le couple du moteur délivré

(30) Priorität: 24.08.2007 DE 202007011919 U
(43) Veröffentlichungstag der Anmeldung: 25.02.2009
(73) Patentinhaber: Audi AG, 85045 Ingolstadt (DE)
(72) Erfinder: Burgert, Sascha, 85088 Vohburg (DE); Apel, Frank, 85055 Ingolstadt (DE); Ecard, Karl Bernhard, 89077 Ulm (DE)
(74) Vertreter: Thielmann, Frank

(56) Entgegenhaltungen:
- EP-A1- 0 023 283
- EP-A1- 1 775 501
- EP-A2- 1 911 997
- DE-A1- 3 912 359
- DE-A1- 10 209 546
- JP-A- 57 033 027
- JP-A- 2002 301 946
- US-A- 5 941 922
- US-A1- 2003 074 158

## Beschreibung

Die Erfindung betrifft ein Kraftfahrzeug umfassend einen Motor nebst vom Fahrer aktiv schaltbarem Getriebe, umfassend eine Einrichtung zur Ermittlung und Ausgabe einer Information zum Schalten des Getriebes an einer Anzeigeeinrichtung.

Moderne Kraftfahrzeuge verfügen über eine Einrichtung zur Ausgabe einer Schaltempfehlung, um dem Fahrer einen aus verbrauchstechnischer Sicht günstigen Zeitpunkt mitzuteilen, zu dem er einen Gang hoch schalten sollte. Diese Schaltempfehlung wird üblicherweise in Form einer einfachen, relativ kleinen Pfeildarstellung an einem Display im Kombiinstrument oder dergleichen ausgegeben. Zur Ermittlung greift die Einrichtung auf diverse Betriebsparameter insbesondere des Motors und des Getriebes zurück, also beispielsweise die Motordrehzahl, das gelieferte Motordrehmoment, etc.

Zwar erhält der Fahrer über die Pfeildarstellung grundsätzlich eine Schaltinformation, jedoch ist diese leicht zu übersehen. Darüber hinaus ist der Informationsgehalt dieser Pfeildarstellung auch begrenzt und erschöpft sich lediglich in einer Schaltempfehlung. Weitere Informationen, insbesondere hinsichtlich des noch abrufbaren Leistungsvermögens des Antriebsaggregats oder dergleichen, erhält der Fahrer nicht.

DE 39 12 359 A1 offenbart eine gattungsgemäße Schalthilfe-Informationseinrichtung in Kraftfahrzeugen.

Der Erfindung liegt damit das Problem zugrunde, ein Kraftfahrzeug anzugeben, das dem Fahrer eine intuitive, auffällige Schaltinformation mit größerer Informationstiefe liefert.

Zur Lösung dieses Problems ist bei einem Kraftfahrzeug der eingangs genannten Art erfindungsgemäß vorgesehen, dass die Informationen in Form eines Farbwechsels einer an der Anzeigeeinrichtung ausgebbaren Farbdarstellung realisiert ist, deren Größe in Abhängigkeit des momentan gelieferten Motordrehmoments oder eines daraus abgeleiteten Betriebsparameters verändert ist und in Relation zu einer das maximale Motordrehmoment bei aktueller Drehzahl oder einen daraus abgeleiteten Betriebsparameter, und/oder in Relation zu einer das grundsätzlich maximal lieferbare Motordrehmoment oder einen daraus abgeleiteten Betriebsparameter darstellenden Vergleichsanzeige darstellbar ist.

Zur Informationsdarstellung nutzt das erfindungsgemäße Kraftfahrzeug eine an der Anzeigeeinrichtung, beispielsweise dem am Kombiinstrument befindlichen Farbdisplay, ausgebbare größerflächige Farbdarstellung, beispielsweise in Form einer definierten geometrischen Figur, vorzugsweise eines Kreises. Diese Farbdarstellung wechselt die Farbe dann, wenn ein günstiger Schaltzeitpunkt, bezogen auf den Ist-Fahrzustand, gegeben ist. Beispielsweise leuchtet die Farbdarstellung in blau oder hellblau auf, wenn es aus kraftstoffverbrauchstechnischen Gesichtspunkten zweckmäßig ist, im momentan gegebenen Getriebegang weiterzufahren, d. h., dass der Motor in einem Drehzahlbereich arbeitet, der aus verbrauchstechnischen Gründen entweder optimal oder noch zweckmäßig ist. Je weiter sich jedoch die Drehzahl von dem optimalen oder zweckmäßigen Wertebereich entfernt, wird eine Änderung des Getriebeganges aus verbrauchstechnischen Gründen immer zweckmäßiger. Ab einem bestimmten Zeitpunkt, zu dem ein Gangwechsel zu empfehlen ist, erfolgt dann in jedem Fall ein Farbwechsel beispielsweise hin zu einer gelben Farbdarstellung. Dieser Farbwechsel wird vom Fahrer sofort und aufmerksam wahrgenommen, anders als eine kleine Pfeildarstellung, die der Fahrer sehr leicht übersehen kann. Der Farbwechsel kann entweder schlagartig erfolgen oder fließen, in letzterem Fall ändert sich die Farbe sukzessive, je stärker sich die Drehzahl von einem optimalen Wert oder einem als zweckmäßig angesehenen Werteintervall der Motordrehzahl entfernt. Der Motor kann ein Verbrennungsmotor sein, der Benzin oder Dieselkraftstoff verbraucht, oder jeder andere Motorentyp, z. B. ein Elektromotor oder ein Wasserstoff- oder Erdgasmotor. Auch bei diesen Motortypen gibt es optimale Schaltzeitpunkte, die erfindungsgemäß ermittelt und angezeigt werden können.

Der Fahrer erhält also erfindungsgemäß eine intuitive, auffällige Farbdarstellung nebst Farbwechsel zur Gabe der Schaltinformation, d. h., die Informationsvermittlung ist beim erfindungsgemäßen Kraftfahrzeug wesentlich effizienter, weil auffällig und in jedem Fall wahrnehmbar.

Die Informationstiefe, die seitens der Einrichtung realisiert bzw. ausgegeben werden kann, ist jedoch auf die reine Schaltempfehlung erfindungsgemäß nicht beschränkt. Vielmehr wird anhand der Farbdarstellung in Verbindung mit wenigstens einer Vergleichsanzeige auch eine Information dahingehend gegeben, wie das Verhältnis des aktuell gelieferten Motordrehmoments, also der Kraft, die über den Motor an die Räder gegeben wird, oder eines daraus abgeleiteten Betriebsparameters wie der gelieferten Leistung oder dergleichen im Verhältnis zu entweder dem bei der momentan gegebenen Drehzahl maximal erzielbaren Motordrehmoment oder einem entsprechend daraus abgeleiteten Betriebsparameter ist, oder wie das Verhältnis zu dem vom Motor grundsätzlich unabhängig von der Ist-Drehzahl lieferbaren Motordrehmoment respektive einem abgeleiteten vergleichbaren Betriebsparameter ist. Die Größe der Farbdarstellung wird in Abhängigkeit des aktuellen Motordrehmoments bestimmt, d. h., je größer das momentan gelieferte Motordrehmoment ist, umso größer ist beispielsweise die als Farbkreis realisierte Farbdarstellung, je kleiner das Motormoment ist, umso kleiner ist die Farbdarstellung. Der Fahrer erkennt also anhand der Größe der Farbdarstellung und der oder den zu dieser erzeugten und dargestellten Vergleichsanzeige sofort, inwieweit noch Leistungsreserven gegeben sind. Der Fahrer erhält folglich auch Informationen über das vorhandene Leistungsvermögen des Antriebsaggregats gleich welcher Typ (Brennkraftstoff, Elektro, Erdgas etc.), wobei die angezeigten Informationen ohne Weiteres anhand der im Rahmen der Ermittlung der Schaltempfehlung erfassten und verarbeiteten Betriebsparameter ermittelt werden können. Denn auch in die Ermittlung des aktuellen Drehmoments oder des maximal bei der gegebenen Drehzahl leistbaren Drehmoments gehen Betriebsparameter des Motors ein, die auch zur Ermittlung der Schaltempfehlung zu berücksichtigen sind.

Die ausgegebene Information ist also mehrteilig und umfasst zum einen die Schaltinformation, realisiert über einen etwaigen Farbwechsel, sowie die Leistungsinformation, realisiert über das Verhältnis der Größe der Farbdarstellung in Relation zu einer oder mehreren angezeigten Vergleichsanzeigen.

In Weiterbildung der Erfindung kann nicht nur ein einmaliger, sondern ein zweimaliger bzw. zweistufiger Farbwechsel vorgesehen sein. Über einen Farbwechsel von einer ersten Farbe in einer zweite Farbe kann dem Fahrer über die Einrichtung das Hochschalten um einen Gang visualisiert werden, über einen Farbwechsel von der zweiten Farbe in eine dritte Farbe kann das Hochschalten um zwei Gänge visualisiert werden. Dieses Szenario ist dann gegeben, wenn der Fahrer in einem niedrigen Gang äußert hochtourig fährt, so dass es zum Erzielen eines Betriebs des Motors in einem optimalen oder zweckmäßigen Drehzahlbereichs nicht ausreichend ist, lediglich einen Gang höher zu schalten. Beispielsweise kann die erste Farbe blau oder hellblau sein, während die zweite Farbe gelb ist und die dritte Farbe rot ist. Über die rote Farbe, der grundsätzlich ein Warncharakter zu eigen kommt, wird die Schaltinformation noch intensiver visualisiert. Selbstverständlich können auch andere Farben dargestellt werden, wobei auch hier ein abrupter oder fließender Farbwechsel möglich ist.

Wie bereits beschrieben ist die Farbdarstellung zweckmäßigerweise in Form einer farbig dargestellten geometrischen Figur realisiert, bevorzugt in Form eines Kreises oder eines Kreisrings. Ein Kreis wäre vollständig farbig ausgefüllt, ein Kreisring im Ringbereich ebenfalls, die Mitte wäre beispielsweise schwarz dargestellt. Jedoch sind auch andere geometrische Figuren realisierbar, beispielsweise in Form eines Quadrats oder eines Rechtecks oder Mehrecks, einer Ellipse oder einer beliebigen anderen regelmäßigen oder unregelmäßigen Figur.

Eine Vergleichsdarstellung wird zweckmäßigerweise in Form einer die Farbdarstellung umgebenden Linie realisiert. Die Vergleichsdarstellung dient lediglich zu Vergleichs- oder Referenzzwecken, damit der Fahrer erkennen kann, wie viel Leistungs- oder Drehmomentreserve er bei der aktuellen Drehzahl noch hat, weshalb hierfür eine Liniendarstellung ausreichend ist. Nachdem die Farbdarstellung zweckmäßigerweise umso größer wird, je größer das aktuell gelieferte Motordrehmoment oder ein daraus abgeleiteter Parameter ist, sich also mit zunehmender Leistung bzw. Drehmoment ausdehnt, umgibt die jeweilige Vergleichsdarstellung die Farbdarstellung außenseitig, wobei der Abstand der Farbdarstellung zur jeweiligen Vergleichsdarstellungslinie die vorhandene Reserve visualisiert.

Zweckmäßigerweise wird die Information in Form eines Kreises oder Kreisrings dargestellt und die eine oder die beiden Vergleichsdarstellungen in Form von dazu konzentrischen Kreislinien, wodurch eine intuitive, symmetrische Informationsdarstellung möglich ist.

Eine Alternative zu einem vollflächigen Farbwechsel kann derart sein, dass die Farbdarstellung, insbesondere in Form eines Kreises oder Kreisrings, in Abhängigkeit des anhand eines oder mehrerer Motorbetriebsparameter ermittelbaren Beschleunigungsverhaltens ausgehend von der Darstellungsmitte farblich veränderbar ist, derart, dass mit zunehmend verbrauchssteigendem Beschleunigungsverhalten eine immer größere andersfarbige, insbesondere schwarze Fläche dargestellt wird. Beschleunigt der Fahrer also übermäßig stark, so dass der Verbrauch deutlich zunimmt, so bildet sich ausgehend von der Darstellungsmitte bei einer Kreisdarstellung eine mit zunehmend negativem Beschleunigungsverhalten immer größer werdende vorzugsweise schwarze Fläche aus, d. h., dass sich die Farbdarstellung quasi von innen heraus auflöst, die Farbfläche wird immer kleiner, woran der Fahrer sein beschleunigungstechnisch gesehen negatives Verhalten ebenfalls sofort erkennen kann. Die Referenzierung zu dem oder den Vergleichsdarstellungen bleibt jedoch auch bei dieser alternativen Farbvariationsmöglichkeit nach wie vor gegeben.

Zur weiteren Erhöhung der Informationstiefe kann vorgesehen sein, dass innerhalb der Farbdarstellung der aktuell eingelegte Gang anzeigbar ist. D. h., dass bei einer kreisförmigen Farbdarstellung in der Mitte der jeweils eingelegte Gang auch als Zahlenwert visualisiert. Alternativ oder zusätzlich kann ferner vorzugsweise innerhalb der Farbdarstellung auch eine vorzugsweise pfeilförmige zusätzliche Schaltinformation angezeigt werden, wie der Fahrer dies möglicherweise bisher bereits kennt. Sowohl die zahlenmäßige Ganganzeige wie auch die zusätzliche Schaltinformation können selbstverständlich ebenfalls in beliebigen Farben am Farbdisplay ausgegeben werden.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig.1: eine Prinzipdarstellung eines erfindungsgemäßen Kraftfahrzeugs mit der Systemarchitektur zur Ermittlung und Ausgabe der Schaltinformation nebst Leistungsinformation,
- Fig. 2: eine Prinzipdarstellung der Farbdarstellungen der Vergleichsanzeigen, und
- Fig. 3a - c: drei Darstellungsweisen bei zunehmender Drehzahl ohne Schaltvorgang.

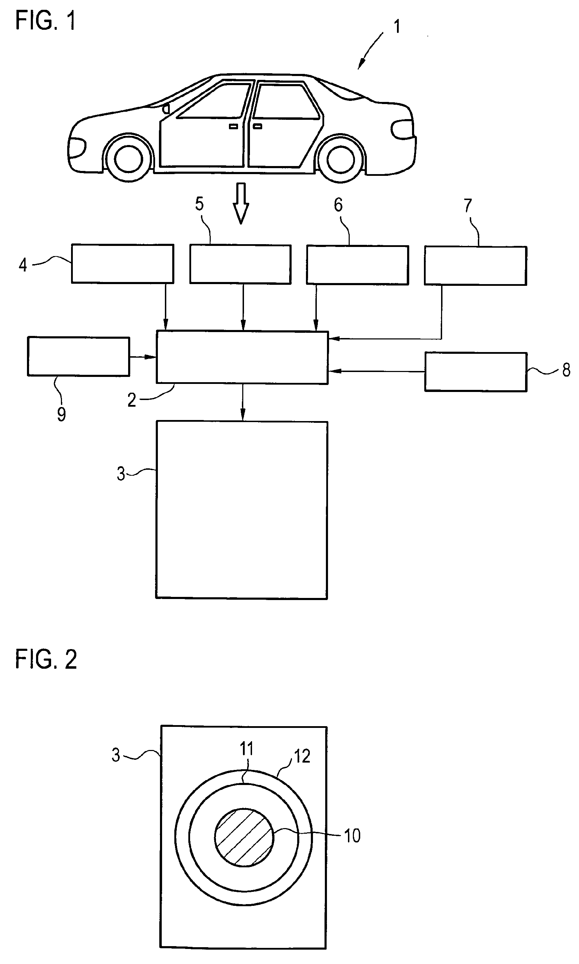

Fig. 1 zeigt ein erfindungsgemäßes Kraftfahrzeug, umfassend eine Einrichtung 2, die zur Ermittlung und Ausgabe einer Schaltinformation dient, die einen zweckmäßigen Schaltzeitpunkt zum Hochschalten eines Getriebeganges ermittelt und an einer Anzeigeeinrichtung ausgibt, und die darüber hinaus eine oder mehrere Vergleichsanzeigen ermittelt und ausgibt, die motorbezogene Leistungsdaten darstellt und als Vergleichsmöglichkeit oder Referenzmöglichkeit für die variable Schaltanzeige in Form einer größenveränderbaren Farbdarstellung darstellen.

Zur Ermittlung der Schaltinformationen in Form einer Farbdarstellung, vorzugsweise in Form eines geometrischen Körpers wie eines Kreises, dessen Größe in Abhängigkeit des momentan gelieferten Motordrehmoment oder eines daraus abgeleiteten Betriebsparameters veränderbar ist, erfasst die Einrichtung 2 unterschiedliche an einem Fahrzeugbus, üblicherweise dem CAN-Bus, anliegende Informationen oder Betriebsparameter etc., die zur Ermittlung der Farbdarstellung in der beschriebenen Form erforderlich sind. Exemplarisch ist hier der Motor 4 gezeigt, von dem oder dessen Steuergerät unterschiedliche Betriebsparameter wie aktuelle Drehzahl, aktuell geliefertes Motordrehmoment und ähnliches an den Fahrzeugbus gelegt respektive von der Einrichtung 2 erfasst werden. Ferner ist exemplarisch ein Getriebe 5 respektive dessen Steuergerät gezeigt, das ebenfalls entsprechende Betriebsparameter an den Fahrzeugbus anlegt, die gegebenenfalls von der Einrichtung 2 erfasst und verarbeitet werden. Lediglich exemplarisch sind weitere Einrichtungen 6, 7 und 8 gezeigt, bei denen es sich beispielsweise um das Kombiinstrument handelt, an dem z. B. Informationen über die Ist-Geschwindigkeit abgegriffen werden, oder Raddrehzahlsensoren oder dergleichen, also allesamt Einrichtungen, die ebenfalls Informationen auf den Fahrzeugbus legen, die gegebenenfalls - jedoch nicht zwingend - von der Einrichtung 2 im weiteren Verlauf berücksichtigt werden.

Gezeigt ist ferner ein Bedienelement 9, über das die grundsätzliche Funktionalität der Einrichtung 2 zu- oder abgeschaltet werden kann. Der Fahrer kann also wählen, ob er die Schaltzeitpunktanzeige in Verbindung mit der Leistungsanzeige grundsätzlich aktivieren möchte, oder ob dieses System nicht betrieben werden soll. An der Anzeigeeinrichtung 3 ist beispielsweise eine Menüdarstellung ausgegeben, innerhalb welcher unterschiedliche Systeme wie beispielsweise Bordcomputer oder dergleichen angewählt werden können, unter anderem auch die Einrichtung zur Schaltinformationsanzeige. Wählt der Fahrer diesen Menüpunkt über das Bedienelement 9 an, so erfolgt die entsprechende Informations- respektive Vergleichsanzeigeermittlung und Ausgabe an der Anzeigeeinrichtung 3.

Fig. 2 zeigt eine Prinzipdarstellung der verschiedenen, an der Anzeigeeinrichtung 3 ausgegebenen Informationen. Zum einen ist als farbiger Kreis eine Farbdarstellung 10 gezeigt, die im Wesentlichen mittig dargestellt wird. Diese Farbdarstellung ist in ihrer Größe veränderbar, und zwar in Abhängigkeit des momentan gelieferten Motordrehmoments oder eines daraus abgeleiteten Betriebsparameters. Je höher das momentan bei der gegebenen Drehzahl gelieferte Motordrehmoment ist, desto größer wird der Kreis, und umgekehrt. Anstelle des Motordrehmoments kann aber auch jeder andere daraus abgeleitete Betriebsparameter wie z. B. die aktuelle Leistung oder auf die Räder übertragene Kraft als Ermittlungsgrundlage für die Größe der Farbdarstellung 10 dienen. Die Größe der Farbdarstellung gibt also letztlich an, wie groß das aktuell genutzte Drehmoment respektive die übertragene Kraft etc. ist.

Die dargestellte Farbe wiederum richtet sich danach, ob der gegebene Betriebsbereich, in dem der Motor arbeitet, aus kraftstoffverbrauchstechnischer Sicht effizient, also günstig ist, oder nicht. Beispielsweise wird eine blaue Farbdarstellung 10 angezeigt, wenn das Fahrzeug in einem effizienten weil kraftstoffsparenden Modus gefahren wird, mithin also die Drehzahl relativ gering ist, jedoch relativ hohe Last aufgenommen wird. Die Farbe der Farbdarstellung 10 wechselt nun, wenn der Fahrbetrieb ineffizient wird, d. h., wenn der Fahrer beispielsweise stark beschleunigt, also die Motordrehzahl stark erhöht wird und folglich auch der Kraftstoffverbrauch stark ansteigt. Würde der Fahrer jedoch in einen höheren Gang schalten, könnte der Kraftstoffverbrauch wieder zurückgenommen werden, der Betrieb wäre folglich effizienter. Dieser Schaltzeitpunkt wird nun seitens der Einrichtung 2 ermittelt, wozu die eingangs genannten Betriebsparameter respektive Informationen vom Fahrzeugbus abgegriffen und verarbeitet werden. Spätestens mit Erreichen eines solchen Schaltzeitpunktes erfolgt ein Farbwechsel, beispielsweise von der beschriebenen blauen Farbe, die effizientes Fahren anzeigt, hin zu einer gelben Farbdarstellung 10, die ein deutlich ineffizienteres Fahren visualisiert. Dieser Farbwechsel kann entweder schlagartig oder fließend erfolgen, wozu ein vorbestimmter Drehzahlbereich vorgesehen sein kann, in dem dieser Farbumschlag erfolgt. Gleichzeitig nimmt natürlich die Farbdarstellung 10 an Größe zu, d. h., sie dehnt sich symmetrisch aus, nachdem mit steigender Drehzahl auch das aktuell gelieferte Motordrehmoment oder der daraus ermittelte Betriebsparameter zunimmt. Schaltet der Fahrer nun aufgrund des gegebenen Schalthinweises, wechselt die Farbe wieder zurück zu blau, wenn sich wieder der effiziente Betriebsbereich einstellt, auch nimmt die Kreisgröße wieder ab, nachdem infolge der Drehzahlreduzierung, die mit einem Hochschalten verbunden ist, auch das aktuell gelieferte Motordrehmoment wieder abnimmt. Selbstverständlich sind hierzu entsprechende Kennfelder oder Kennlinien oder dergleichen in der Einrichtung 2 abgelegt, die zusätzlich die Ermittlung all dieser Betriebsparameter ermöglichen.

Sollte jedoch kein Schaltvorgang erfolgen, und erhöht der Fahrer die Drehzahl noch weiter, so kann ihm über einen zweiten Farbwechsel beispielsweise von gelb nach rot visualisiert werden, dass er nunmehr für ein effizientes Fahren und folglich Rückführen der Drehzahl in einen hierfür akzeptablen Drehzahlbereich zwei Gänge hochschalten sollte. Der Fahrer erhält also durch diesen zweiten Farbwechsel eine weitere Schaltinformation, wobei sich hierfür eine rote Farbdarstellung 10 eignet, die grundsätzlich einen Warncharakter hat. Inwieweit sich hierbei die kreisförmige Farbdarstellung 10 noch weiter ausdehnt, hängt von der Leistungsfähigkeit des Motors ab, ob diese also im Drehzahlbereich, zu dem die zweite Schaltinformation gegeben wird, noch ansteigt oder nach Überschreiten eines Maximums wieder etwas sinkt.

Neben der Farbdarstellung 10 wird an der Anzeigeeinrichtung 3 ferner eine Vergleichsanzeige 11 ausgegeben, die als konzentrischer Kreis um die kreisförmige Farbdarstellung 10 herum dargestellt wird. Diese Vergleichsdarstellung 11 zeigt das bei der aktuellen Drehzahl maximal abrufbare Motordrehmoment oder den entsprechenden das abgeleitete Betriebsparameter, sollte ein solcher der Ermittlung der Farbdarstellung 10 zugrunde liegen. Über den Abstand der äußeren Berandung der Farbdarstellung 10 zur Vergleichsanzeige 11, die natürlich ebenfalls drehzahlabhängig in ihrem Durchmesser variiert, kann der Fahrer erkennen, welche Leistungsreserve er bei der gegebenen Drehzahl noch hat, also ohne die Drehzahl zu verändern. Die Ermittlung des maximalen Motordrehmoments oder des daraus entsprechend abgeleiteten Betriebsparameters als Vergleichsanzeige 11 erfolgt wie beschrieben ebenfalls seitens der Einrichtung 2, die hierfür die erforderlichen Betriebsparameter oder Informationen vom Fahrzeugbus und dort vom Motor 4 oder dem Motorsteuergerät oder sonstigen Einrichtungen abgreift.

Vorgesehen ist jedoch noch eine zweite Vergleichsdarstellung 12, die hier ebenfalls als konzentrischer Kreis dargestellt ist. Diese in ihrer Größe nicht variierende Vergleichsanzeige 12 gibt das vom Motor grundsätzlich maximal lieferbare Motordrehmoment oder einen entsprechend daraus abgeleiteten Betriebsparameter, sofern der Ermittlung der Vergleichsanzeige 11 und der Farbdarstellung 10 zugrunde liegt, an. Dies ist eine weitere Vergleichsmöglichkeit oder Referenzmöglichkeit für den Fahrer. Hieraus kann er die grundsätzliche Leistungsreserve erkennen, die er überhaupt hat, ausgehend von der gegebenen Ist-Situation. Wenngleich das maximale Drehmoment üblicherweise erst in einem mittleren Drehzahlbereich abrufbar ist, ist die Anzeige für den Fahrer doch sehr hilfreich, da er wie beschrieben die grundsätzliche Leistungsreserve hieran ablesen kann.

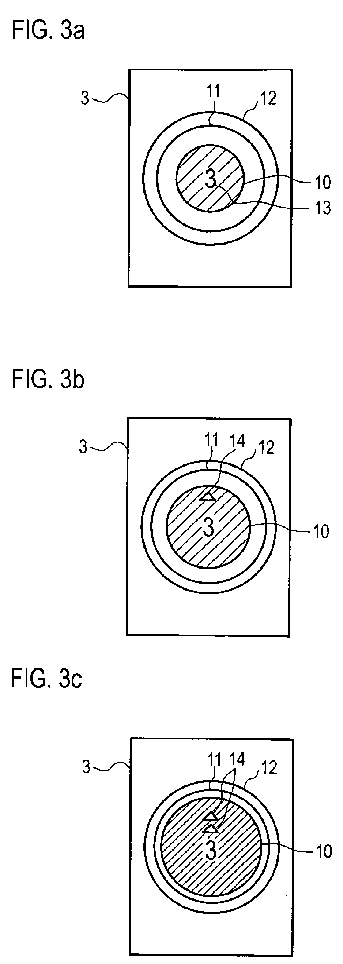

Die Fig. 3a - 3c zeigen die sich verändernde Darstellung an der Anzeigeeinrichtung 3 bei einer Beschleunigung des Fahrzeugs ausgehend von einem Betrieb mit einer Drehzahl in einem optimalen respektive effizienten Drehzahlbereich. Diese Situation zeigt Fig. 3a. Gezeigt ist die Farbdarstellung 10, die hier angenommenermaßen in einem beispielsweise hellblauen Ton dargestellt ist. Gezeigt ist des Weiteren eine Ganganzeige 13, die den aktuell eingelegten Gang, hier den dritten Gang, zeigt. Die Farbdarstellung 10 ist vom Durchmesser her noch relativ klein, da in einem relativ niedrigem Drehzahlbereich gefahren wird und folglich aufgrund niedriger Anforderungen das aktuell gelieferte Drehmoment, das bestimmend für die Farbdarstellungsgröße ist, noch nicht allzu groß ist. Ersichtlich ist auch der Abstand der Außenberandung der Farbdarstellung insbesondere zur Vergleichsanzeige 12, die das maximal leistbare Motordrehmoment darstellt, noch relativ groß. Dargestellt ist ferner die Vergleichsanzeige 11, die das maximal leistbare Motordrehmoment bei der aktuellen Drehzahl darstellt.

Nun beschleunigt der Fahrer, er betätigt also das Fahrpedal, was zu einer Drehzahlerhöhung führt. Mit zunehmender Beschleunigung wird der Fahrbetrieb immer ineffizienter, was dazu führt, dass ab einer bestimmten erhöhten Drehzahl es aus verbrauchstechnischer Sicht zweckmäßiger wäre, wenn der Fahrer in den nächst höheren Gang, hier den vierten, schalten würde. Es kommt angenommener Maßen zu einer Erhöhung des aktuelle gelieferten Drehmoments, was wiederum in einer Vergrößerung der Farbdarstellung 10 resultiert, diese nimmt im Durchmesser zu. Mit Erreichen des vernünftigen Schaltzeitpunktes setzt ein Farbwechsel ein, hier beispielsweise von der hellblauen Darstellung gemäß Fig. 3a in eine gelbe Darstellung in Fig. 3b, die durch eine etwas engere Strichelung der Farbdarstellung 10 visualisiert werden soll. Gleichzeitig wird eine weitere Schaltinformation 14 in Form eines Pfeiles dargestellt, der das Heraufschalten zusätzlich visualisiert.

Nachdem die Drehzahl erhöht wird und daraus resultierend auch das bei der gegebenen Drehzahl maximal leistbare Motordrehmoment zunimmt, vergrößert sich auch der Durchmesser des Kreises der Vergleichsanzeige 11 etwas. Der Abstand der Außenberandung der Farbdarstellung 10 zur Vergleichsanzeige 11 nimmt ab, d. h., dass eine entsprechende Leistungsreserve aufgrund der Drehzahlerhöhung abnimmt. Dies gilt auch in Bezug auf die in ihrer Größe nicht variierende Vergleichsanzeige 12 zum maximal leistbaren Drehmoment des Motors. D. h., dass auch der Abstand zwischen der Außenberandung der Farbdarstellung 10 zur Vergleichsanzeige 11 abgenommen hat, mithin also die Leistungsreserve grundsätzlich geschrumpft ist.

Der Fahrer schaltet nun angenommenermaßen nicht, sondern beschleunigt weiter, die Drehzahl wird weiter erhöht. Dies führt nun dazu, dass angenommenermaßen das Motordrehmoment noch weitersteigt, die Farbdarstellung 10 dehnt sich noch weiter aus und nimmt im Durchmesser zu, so dass sie sich der Vergleichsanzeige 11 und gegebenenfalls auch der Vergleichsanzeige 12 nähert, d. h., die Abstände nehmen noch deutlicher ab, die Leistungsreserve schrumpft noch weiter. Gleichzeitig ermittelt nun die Einrichtung 2, dass die Ist-Drehzahl so hoch ist, dass nicht nur ein Schalten in dem nächst höheren Gang für eine Rückkehr zu einer effizienten Fahrweise erforderlich wäre, sondern dass der Fahrer eigentlich zwei Gänge höher schalten müsste. Infolgedessen kommt es zu einem weiteren Farbwechsel, beispielsweise von gelb gemäß Fig. 3b zu rot in Fig. 3c, wie durch die noch engere Strichelung dargestellt ist. Gleichzeitig werden zwei weitere Schaltinformationen 14 in Form der beiden Pfeile dargestellt, die das Hochschalten um zwei Gänge visualisieren.

Schaltet der Fahrer nun, sei es um einen oder um zwei Gänge, so ändert sich die Farbe der Farbdarstellung 10 wieder, bei Hochschalten um einen Gang nach gelb, bei Hochschalten um zwei Gänge nach hellblau, entsprechend reduziert sich natürlich auch deren Größe und auch die der Vergleichsanzeige 11, je nachdem, in welchem Drehzahlbereich sich der Motor nach dem Hochschalten bewegt.

## Patentansprüche

1. Kraftfahrzeug umfassend einen Motor nebst vom Fahrer aktiv schaltbarem Getriebe, umfassend eine Einrichtung zur Ermittlung und Ausgabe einer Information zum Schalten des Getriebes an einer Anzeigeeinrichtung,
**dadurch gekennzeichnet,**
**dass** die Information in Form eines Farbwechsels einer an der Anzeigeeinrichtung (3) ausgebbaren Farbdarstellung (10) realisiert ist, deren Größe in Abhängigkeit des momentan gelieferten Motordrehmoments oder eines daraus abgeleiteten Betriebsparameter veränderbar ist und in Relation zu einer das maximale Motordrehmoment bei aktueller Drehzahl oder einen daraus abgeleiteten Betriebsparameter, und/oder in Relation zu einer das grundsätzlich maximal lieferbare Motordrehmoment oder einen daraus abgeleiteten Betriebsparameter darstellenden Vergleichsanzeige (11, 12) darstellbar ist.

2. Kraftfahrzeug nach Anspruch 1,
**dadurch gekennzeichnet,**
**dass** als Information ein Farbwechsel von einer ersten Farbe in eine zweite Farbe zur Anzeige eines Hochschaltens um einen Gang und ein Farbwechsel von der zweiten Farbe in eine dritte Farbe zur Anzeige eines Hochschaltens um zwei Gänge ausgebbar ist.

3. Kraftfahrzeug nach Anspruch 1 oder 2,
**dadurch gekennzeichnet,**
**dass** ein Farbwechsel fließend erfolgt.

4. Kraftfahrzeug nach einem der vorangehenden Ansprüche,
**dadurch gekennzeichnet,**
**dass** die Farbdarstellung (10) in Form einer farbig dargestellten geometrischen Figur realisiert ist.

5. Kraftfahrzeug nach Anspruch 4,
**dadurch gekennzeichnet,**
**dass** die geometrische Figur ein Kreis oder ein Kreisring ist.

6. Kraftfahrzeug nach einem der vorangehenden Ansprüche,
**dadurch gekennzeichnet,**
**dass** eine Vergleichsanzeige (11, 12) in Form einer die Farbdarstellung (10) umgebenden Linie realisiert ist.

7. Kraftfahrzeug nach Anspruch 5 und 6,
**dadurch gekennzeichnet,**
**dass** die Farbdarstellung (10) in Form eines Kreises oder Kreisrings und die eine oder die beiden Vergleichsanzeigen (11, 12) in Form von dazu konzentrischen Kreislinien realisiert sind.

8. Kraftfahrzeug nach einem der vorangehenden Ansprüche,
**dadurch gekennzeichnet,**
**dass** die Farbdarstellung (10), insbesondere in Form einer Kreises oder Kreisrings, in Abhängigkeit des anhand eines oder mehrerer Motorbetriebsparameter ermittelbaren Beschleunigungsverhaltens ausgehend von der Darstellungsmitte farblich veränderbar ist, derart, dass mit zunehmend verbrauchssteigerndem Beschleunigungsverhalten eine immer größere andersfarbige, insbesondere schwarze Fläche dargestellt wird.

9. Kraftfahrzeug nach einem der vorangehenden Ansprüche,
**dadurch gekennzeichnet,**
**dass** innerhalb der Farbdarstellung (1) der aktuell eingelegte Gang (13) anzeigbar ist.

10. Kraftfahrzeug nach einem der vorangehenden Ansprüche,
**dadurch gekennzeichnet,**
**dass** innerhalb der Farbdarstellung (10) eine vorzugsweise pfeilförmige zusätzliche Schaltinformation (14) anzeigbar ist.

## Claims

1. Motor vehicle with an engine and a gearbox to be manually shifted by the driver, comprising a device for determining and displaying on a display device information for shifting the gearbox,
**characterized in that**
the information is in the form of a colour change of a colour display (10) displayed on the display device (3), wherein the size of the colour display is changeable depending on the currently supplied engine torque or an operating parameter derived therefrom, and the colour display is displayable in relation to a comparison display (11, 12) displaying the maximum engine torque with actual engine speed or an operating parameter derived therefrom, and/or in relation to a comparison display (11, 12) displaying the fundamental maximum engine torque or an operating parameter derived therefrom.

2. Motor vehicle according to claim 1,
**characterized in that**
the information is displayed in the form of a colour change from a first colour to a second colour to indicate shifting up one gear, and a colour change from the second colour to a third colour to indicate shifting up two gears.

3. Motor vehicle according to claim 1 or 2,
**characterized in that**
a gradual change of colour occurs.

4. Motor vehicle according to any of the preceding claims,
**characterized in that**
the colour display (10) is realized in the form of a geometric object displayed in colour.

5. Motor vehicle according to claim 4,
**characterized in that**
the geometric object is a circle or circular ring.

6. Motor vehicle according to any of the preceding claims,
**characterized in that**
the comparison display (11, 12) is in the form of a line surrounding the colour display (10).

7. Motor vehicle according to claim 5 and 6,
**characterized in that**
the colour display (10) is in the form of a circle or circular ring and the one or both comparison displays (11, 12) are in the form of circle lines concentric thereto.

8. Motor vehicle according to any of the preceding claims,
**characterized in that**
the colour of the colour display (10), in particular in the form of a circle or circular ring, is changeable, starting from the centre of the display, depending on acceleration behaviour determined by using one or more engine operating parameters, such that an increasingly large area of a different colour, in particular of black colour, is displayed for acceleration behaviour with increasing fuel consumption.

9. Motor vehicle according to any of the preceding claims,
**characterized in that**
the current gear (13) used is displayable within the colour display (1).

10. Motor vehicle according to any of the preceding claims,
**characterized in that**
an additional, preferably arrow-shaped, shifting information (14) can be displayed within the colour display (10).

## Revendications

1. Véhicule automobile comprenant un moteur plus une transmission commutable activement par le chauffeur, comprenant un dispositif de détermination et de délivrance d'une information pour connecter la transmission à un dispositif d'affichage,
**caractérisé en ce que** :
l'information est réalisée sous la forme d'un changement de couleur d'une représentation couleur (10) affichable sur un dispositif d'affichage (3), dont la taille peut être modifiée en fonction du couple moteur momentanément délivré ou d'un paramètre de fonctionnement qui en est dérivé et peut être représentée en relation avec un affichage de comparaison (11, 12) représentant le couple moteur maximal à la vitesse de rotation courante ou un paramètre de fonctionnement qui en est dérivé et/ou en relation avec un affichage de comparaison (11, 12) représentant le couple moteur délivrable en principe au maximum ou d'un paramètre de fonctionnement qui en est dérivé.

2. Véhicule automobile selon la revendication 1,
**caractérisé en ce que** :
un changement de couleur d'une première couleur à une deuxième couleur pour afficher un passage à une vitesse supérieure d'une vitesse ainsi qu'un changement de couleur de la deuxième couleur à une troisième couleur pour afficher un passage à une vitesse supérieure de deux vitesses peuvent être délivrés comme informations.

3. Véhicule automobile selon la revendication 1 ou 2,
**caractérisé en ce que** :
un changement de couleur est effectué de façon fluide.

4. Véhicule automobile selon l'une quelconque des revendications précédentes, **caractérisé en ce que** :
la représentation couleur (10) est réalisée sous la forme d'une figure géométrique représentée en couleur.

5. Véhicule automobile selon la revendication 4,
**caractérisé en ce que** :
la figure géométrique consiste en un cercle ou une couronne torique.

6. Véhicule automobile selon l'une quelconque des revendications précédentes,
**caractérisé en ce que** :
un affichage de comparaison (11, 12) est réalisée sous la forme d'une ligne entourant la représentation couleur (10).

7. Véhicule automobile selon les revendications 5 et 6,
**caractérisé en ce que** :
la représentation couleur (10) est réalisée sous la forme d'un cercle ou d'une couronne torique et le ou les affichages de comparaison (11, 12) sont réalisés sous la forme de cercles concentriques.

8. Véhicule automobile selon l'une quelconque des revendications précédentes,
**caractérisé en ce que** :
la représentation couleur (10), en particulier sous la forme d'un cercle ou d'une couronne torique, peut être modifiée en couleur en fonction du comportement à l'accélération déterminable sur la base d'un ou plusieurs paramètres de fonctionnement du moteur en partant du centre de la représentation de sorte que l'accroissement de la consommation lié au comportement à l'accélération soit représenté par une surface de couleur différente de plus en plus grande, en particulier une surface noire.

9. Véhicule automobile selon l'une quelconque des revendications précédentes,
**caractérisé en ce que**,
à l'intérieur de la représentation couleur (10), on peut afficher la vitesse (13) momentanément en prise.

10. Véhicule automobile selon l'une quelconque des revendications précédentes,
**caractérisé en ce que**,
à l'intérieur de la représentation couleur (10), on peut afficher une information de commutation (14) supplémentaire, de préférence en forme de flèche.
